# EUROPEAN PATENT APPLICATION

(11) **EP 4 712 319 A2**
(43) Date of publication of application: **18.03.2026**
(21) Application number: 26155051.1
(22) Date of filing: 05.12.2024
(51) Int. Cl.: H02K 11/225

(54) **MOTOR**

(30) Priority: 30.01.2024 JP 2024012069
(62) Divisional of application: 24217840.8
(71) Applicant: Toyota Jidosha Kabushiki Kaisha, Toyota-shi, Aichi-ken 471-8571 (JP)
(72) Inventor: OURA, Daichi, Toyota-shi, 471-8571 (JP); TABUCHI, Kenta, Toyota-shi, 471-8571 (JP); IMAKAWA, Takashi, Toyota-shi, 471-8571 (JP)
(74) Representative: J A Kemp LLP

(57) **Abstract**

A motor (2) includes: a shaft (4); a rotor (6) fixed to the shaft (4); a stator (8) having an annular shape about a central axis of the rotor (6); and a motor case (20) that houses the rotor (6) and the stator (8). The motor case (20) includes a cooling medium channel (40) and discharge portions (50) in a surface of the motor case (20) that faces the stator (8) in an axial direction of the central axis. The cooling medium channel includes at least a first channel (42) through which a cooling medium flows in a vertical up-down direction. The cooling medium is discharged in the axial direction from the cooling medium channel (40) through the discharge portions (50, 150) toward the inside of the motor case (20).

## Description

### BACKGROUND OF THE INVENTION

### 1. Field of the Invention

The present disclosure relates to motors.

### 2. Description of Related Art

Japanese Unexamined Patent Application Publication No. 2019-41487 (JP 2019-41487 A) discloses placing annular rings in the ends of a motor case to cool the inside of a motor.

Placing such annular rings in the motor case may increase the volume of a motor unit. Moreover, since the rings have an annular shape, the number and positions of portions from which a cooling medium is discharged may be limited.

### SUMMARY OF THE INVENTION

The present disclosure provides a technique that allows efficient cooling of a portion of a motor that is to be cooled by optimizing portions from which a cooling medium is discharged, etc. while minimizing the space required for cooling.

According to an embodiment of the present disclosure, a motor includes: a shaft; a rotor fixed to the shaft; a stator having an annular shape about a central axis of the rotor; and a motor case that houses the rotor and the stator. The motor case includes a cooling medium channel and discharge portions in a surface of the motor case that faces the stator in an axial direction of the central axis. The cooling medium channel includes at least a first channel through which a cooling medium flows in a vertical up-down direction. The cooling medium is discharged in the axial direction from the cooling medium channel through the discharge portions toward inside of the motor case.

According to this motor, the cooling medium is discharged from the surface of the motor case that faces the stator in the axial direction directly to the stator etc. through the cooling medium channel. Providing such a cooling medium channel in the surface allows patterns of the cooling medium channel and the discharge portions to be designed according to the portions to be cooled, the degree of cooling, and therefore allows efficient cooling. The above configuration can reduce an increase in space required for cooling even when the number of portions from which the cooling medium is discharged increases.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a sectional view showing an embodiment of a cooling medium channel and a discharge portion that are provided in a cover of a motor case;
FIG. 2 shows an example of patterns of the cooling medium channel and the discharge portion;
FIG. 3 shows an example of the pattern of the discharge portion for a stator and a rotor;
FIG. 4 shows another example of the patterns of the cooling medium channel and the discharge portion;
FIG. 5 shows another example of the pattern of the discharge portion for the stator and the rotor;
FIG. 6 shows still another example of the pattern of the discharge portion for the stator and the rotor;
FIG. 7 is a sectional view showing an embodiment in which a cooling medium is discharged through a resolver; and
FIG. 8 is a diagram showing an example of a connection channel and a discharge portion that are formed in the resolver.

### DETAILED DESCRIPTION OF EMBODIMENTS

According to an embodiment of the present disclosure, a motor includes: a rotor fixed to a shaft; a stator having an annular shape about a central axis of the rotor; and a motor case that houses the rotor and the stator. The motor case includes a cooling medium channel and a plurality of discharge portions in a surface of the motor case that faces the stator in an axial direction of the central axis, the cooling medium channel including at least a first channel through which a cooling medium flows in a vertical up-down direction, and the discharge portions being portions through which the cooling medium is discharged in the axial direction from the cooling medium channel toward inside of the motor case.

The cooling medium channel may include at least one second channel that branches off from the first channel. At least one of the discharge portions may be located in the at least one second channel. This configuration allows the patterns of the cooling medium channel and the discharge portions to be designed with higher flexibility, and thus allows efficient cooling.

The motor case may include a cover in the surface that faces the stator in the axial direction. The cooling medium channel is inside the cover. The discharge portions may be holes that communicate with the cooling medium channel inside the cover. This configuration can increase the flow of the cooling medium and the number of portions from which the cooling medium is discharged while reducing an increase in space required for cooling.

The discharge portions may include a hole that discharges the cooling medium toward a coil end of the stator. This configuration allows cooling of the coil end that tends to become hot.

The discharge portions may include a hole that discharges the cooling medium toward an inner periphery of a coil end of the stator. This configuration allows the coil end that is conventionally difficult to be cooled to be cooled from its inner periphery.

The motor may further include a bearing for the shaft. The discharge portions may include a hole that discharges the cooling medium to the bearing to lubricate the bearing. This configuration improves lubrication of the bearing while also cooling the bearing.

The discharge portions may include holes having different diameters. This configuration can change the discharge amount and discharge pressure of the cooling medium according to the degree of cooling. The holes having the different diameters may include a first hole having a first diameter and a second hole having a second diameter different from the first diameter. The first hole may discharge the cooling medium toward an upper portion of a coil end that is located in a vertically upper part of the stator. The second hole may discharge the cooling medium toward a lower portion of the coil end that is located in a vertically lower part of the stator. This configuration allows the coil end to be cooled regardless of the position in the vertical direction.

The motor may further include a rotation angle sensor unit. The rotation angle sensor unit may include a rotation angle sensor that detects a rotation angle of the rotor, and a protective cover attached to the rotation angle sensor. The protective cover may include a connection channel that communicates with the cooling medium channel. The discharge portions may include holes provided in the connection channel. The holes may discharge the cooling medium from the connection channel toward a coil end of the stator. This configuration allows efficient cooling of the coil end by using the remaining space near the coil end, even when the rotation angle sensor unit is provided. At least one of the holes may discharge the cooling medium toward an inner periphery of the coil end. This configuration allows the inner periphery of the coil end to be cooled efficiently.

A motor disclosed in the present specification will be described below by referring to the drawings as appropriate. In the specification, the motor is not particularly limited, but may be, for example, a traction motor installed in an electrified vehicle, or may be part of an eAxle etc. The electrified vehicle is, for example, a battery electric vehicle (BEV), a hybrid electric vehicle (HEV), a plug-in hybrid electric vehicle (PHEV), or a fuel cell electric vehicle (FCEV). The upper side in the vertical direction when the motor is mounted on the vehicle is sometime simply referred to as "upper" etc., and the lower side in the vertical direction when the motor is mounted on the vehicle is sometimes simply referred to as "lower" etc. In the present specification, the term "axial direction" simply means a direction parallel to the central axis of a rotor of a motor. In the drawings, "UP," "DW," "W1," and "W2" indicate the upper side in the vertical direction, the lower side in the vertical direction, one side in the vehicle width direction, and the other side in the vehicle width direction, respectively.

### FIRST EMBODIMENT

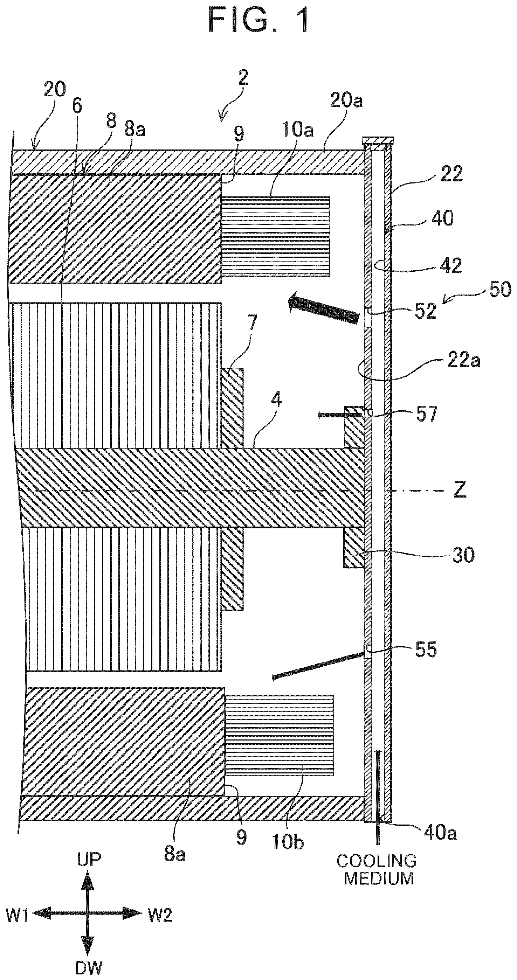

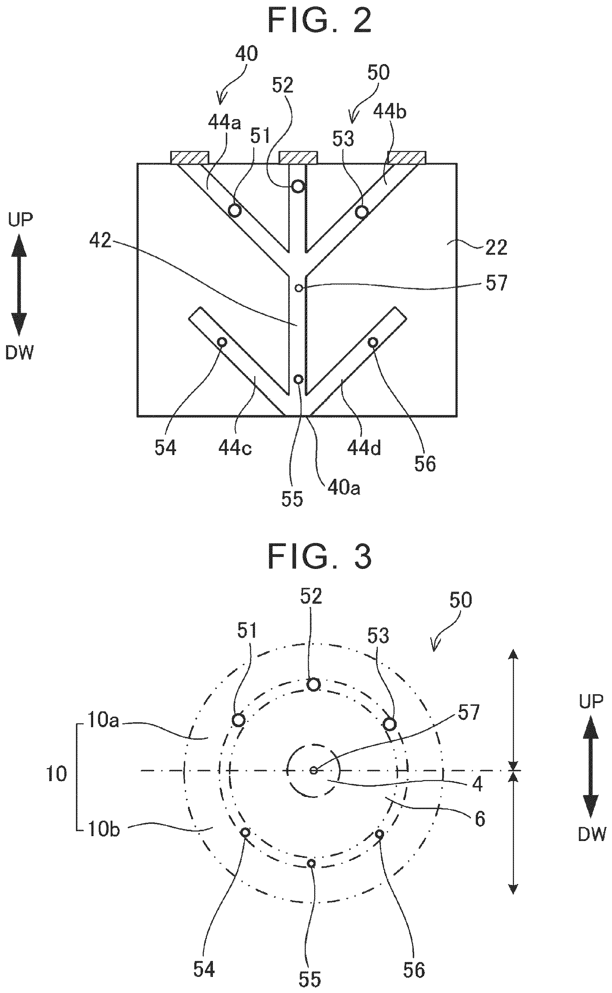

A first embodiment illustrates a form in which a cooling medium is directly discharged from a cover 22 of a motor case 20 toward coil ends 10a, 10b. FIG. 1 is a sectional view taken along a plane including a central axis Z, and shows a portion around the coil ends 10a, 10b on the non-output side of a motor 2 and the cover 22. FIG. 2 shows an example of patterns of a cooling medium channel (hereinafter simply referred to as channel) 40 and a discharge portion 50 in the cover 22. FIG. 3 shows an example of a pattern of the discharge portion 50 for a rotor 6 and a stator 8.

As shown in FIG. 1, the motor 2 includes the rotor 6 and the stator 8, and is housed in the motor case 20.

The rotor 6 is rotatably supported by a shaft 4 that extends along the central axis Z. The central axis Z is also the rotation axis of the rotor 6. In FIG. 1, one end of the shaft 4 is attached to the cover 22 of the motor case 20 via a bearing 30. The rotor 6 has a configuration known to those skilled in the art. An end plate 7 is provided as necessary on an end face of the rotor 6 that faces the cover 22 in the axial direction. Although the direction in which the central axis Z extends is not particularly limited, the motor 2 is disposed so that, for example, the central axis Z extends horizontally.

The stator 8 is configured as a generally annular element about the central axis Z. The stator 8 includes a stator core 8a and a coil 10 installed in the stator core 8a. The stator core 8a is an annular member about the central axis Z. The stator core 8a extends in the axial direction along the central axis Z, and surrounds the outer peripheral surface of the rotor 6. The stator core 8a has, for example, a plurality of teeth (not shown) arranged in the circumferential direction of the stator core 8a and protruding radially inward.

For example, the coil 10 is installed in the stator core 8a by winding a conductive wire around the teeth of the stator core 8a. The coil 10 protrudes beyond an axial end face 9 of the stator core 8a to form the coil ends 10a, 10b. The coil end 10a is a protruding portion of the coil 10 that is located in a vertically upper part of the stator 8, and the coil end 10b is a protruding portion of the coil 10 that is located in a vertically lower part of the stator 8. Although not shown in the figures, the coil 10 also protrudes beyond the opposite axial end face of the stator core 8a from the axial end face 9 to form a coil end.

The motor case 20 is in such a form that the motor case 20 houses the entire motor 2. The motor case 20 includes a case body 20a that is a cylindrical member extending in the axial direction of the motor 2, and the cover 22 that covers the non-output side of the motor 2 in the axial direction of the case body 20a. The non-output side refers to an end that is not connected to a gear unit, not shown, out of ends of the motor 2 in the axial direction of the shaft 4. Although not shown in the figures, the motor case 20 also includes a cover that covers the output side of the motor 2. The motor case 20 is made of a metal material such as aluminum.

The case body 20a holds the stator core 8a from outside in the radial direction of the stator core 8a. The cover 22 is in such a form that it covers the non-output end of the motor 2 . The cover 22 rotatably supports the shaft 4. A bearing 30 is mounted around the shaft 4 on an inner surface 22a of the cover 22 that faces the stator 8 in the axial direction. The other cover, not shown, also rotatably supports the shaft 4.

As shown in FIGS. 1 to 3, the channel 40 through which a cooling medium flows and the discharge portion 50 from which the cooling medium is discharged are provided inside the cover 22. FIG. 2 illustrates a pattern of the channel 40 inside the cover 22. As shown in FIG. 2, the channel 40 includes a vertical channel 42 that extends in the vertical up-down direction inside the cover 22, and a branch channel 44 that branches off from the vertical channel 42. The vertical channel 42 is an example of the first channel disclosed in this specification, and the branch channel 44 is an example of the second channel disclosed in the present specification.

For example, the vertical channel 42 extends in the vertical up-down direction so as to cross the central axis Z. This allows the cooling medium to be easily discharged to a desired portion through the vertical channel 42 alone or in combination with the branch channel 44. A plurality of vertical channels 42 may be provided.

The branch channel 44 is a channel that branches off at any desired position from the vertical channel 42. One branch channel 44 may be provided, or two or more branch channels 44 may be provided. The channel pattern of the branch channel 44 is not particularly limited. For example, as shown in FIG. 2, the branch channel 44 may be provided at vertical upper and lower positions of the vertical channel 42. This makes it easier to discharge the cooling medium to each of the coil ends 10a, 10b. In FIG. 2, branch channels 44a, 44b extend obliquely in one direction (in FIG. 2, upward) from both sides of the vertical channel 42 at any height position of the vertical channel 42, and branch channels 44c, 44d also extend obliquely in the one direction (in FIG. 2, upward) from both sides of the vertical channel 42 at a different height position of the vertical channel 42.

As shown in FIG. 2, the branch channel 44 may have, for example, its distal end either closed inside the cover 22 or open to the outside of the cover 22. The branch channel 44 may extend perpendicularly to the vertical channel 42, or may extend obliquely downward or obliquely upward. The branch channel 44 may extend linearly and/or in a curved manner.

The pattern of the channel 40 is not particularly limited as long as the channel 40 includes at least one vertical channel 42. The pattern of the channel 40 is set as appropriate according to the portions of the motor 2 that are to be cooled.

The cooling medium for cooling the motor 2 is supplied from outside the motor case 20 to the channel 40. The cooling medium is supplied to the channel 40 from a cooling system for an eAxle including the motor 2, not shown. The cooling system includes the motor 2, a channel for circulating the cooling medium so as to cool the gear unit, not shown, and a pump for pumping the cooling medium. In the motor 2 shown in FIGS. 1 to 3, an oil-based cooling medium having lubricating properties is used as the cooling medium. In the present specification, the term "cooling medium" refers to a liquid cooling medium, not only an oil-based cooling medium but also a water-based cooling medium can be used.

The channel 40 includes a cooling medium inlet 40a through which the cooling medium flows into the channel 40 from the cooling system. As shown in FIGS. 1 and 2, the cooling medium inlet 40a is open at the lower end of the vertical channel 42. Openings of the channel 40 other than the cooling medium inlet 40a are sealed as appropriate with embedded plugs.

As shown in FIGS. 1 to 3, the channel 40 includes the discharge portion 50 composed of a plurality of holes. The pattern of the discharge portion 50 is shown in FIGS. 2 and 3.

For example, as shown in FIGS. 2 and 3, holes 51 to 53 and holes 54 to 56 are formed as the discharge portion 50 in the vertically upper and lower parts of the channel 40, respectively. All of the holes 51 to 56 allow the branch channels 44a, 44b, 44c, and 44d to communicate with the motor case 20. The holes 51, 53 are open to the branch channels 44a, 44b, respectively. The hole 52 is open to the vertical channel 42. The holes 54, 56 are open to the branch channels 44c, 44d, respectively. The hole 55 is open to the vertical channel 42.

As shown in FIGS. 1 to 3, the holes 51 to 53 of the discharge portion 50 are open at such positions that the cooling medium can be discharged from the holes 51 to 53 toward the inner periphery of the coil end 10a. The holes 51 to 53 are located closer to the central axis Z than the coil end 10a. The holes 54 to 56 are open at such positions that the cooling medium can be discharged from the holes 54 to 56 toward the inner periphery of the coil end 10b. The holes 54 to 56 are located closer to the central axis Z than the coil end 10b. The holes 51 to 53 are an example of the first hole in the present specification. The holes 54 to 56 are an example of the second hole in the present specification.

For example, the holes 51 to 53 have, but are not particularly limited to, the shape of a circular opening with the same diameter. The holes 54 to 56 have the shape of a circular opening with the same diameter, and are smaller than the holes 51 to 53. The diameter of the holes 51 to 53 is an example of the first diameter in the present specification. The diameter of the holes 54 to 56 is an example of the second diameter in the present specification.

The vertical channel 42 has a hole 57 at one position. The hole 57 is open toward part of the bearing 30 mounted on the shaft 4. The hole 57 is formed so that the cooling medium can be discharged from the hole 57 toward a rolling element holding portion of the bearing 30. Rolling elements of the bearing 30 can thus be lubricated and cooled by the cooling medium through the hole 57. The hole 57 has the shape of a circular opening with a smaller diameter than the holes 54 to 56. The hole 57 is located closer to the center than the holes 51 to 53 and the holes 54 to 56.

Next, functions of the motor 2 will be described. With the motor 2, when the cooling medium is supplied from the cooling medium inlet 40a of the channel 40, the cooling medium is pumped upward through the channel 40 from the lower end of the channel 40 at a predetermined discharge pressure. The cooling medium is thus discharged from the holes 54 to 56, the holes 51 to 53, and the hole 57. Since the cooling medium is discharged from the holes 54 to 56 toward the inner periphery of the coil end 10b, the cooling medium cools the coil end 10b from the inner periphery of the coil end 10b. Since the cooling medium is discharged from the holes 51 to 53 toward the inner periphery of the coil end 10a, the cooling medium cools the coil end 10a from the inner periphery of the coil end 10a.

The holes 54 to 56 have a smaller diameter than the holes 51 to 53, but are located closer to the cooling medium inlet 40a. Therefore, the discharge pressure of the holes 54 to 56 is high. Accordingly, the coil end 10b is sufficiently cooled. The holes 51 to 53 have a larger diameter than the holes 54 to 56 and discharge a larger amount of cooling medium than the holes 54 to 56. Therefore, the coil end 10a that tends to have a high temperature is sufficiently cooled.

The cooling medium is also discharged from the hole 57 toward the rolling element holding portion of the bearing 30. Since an oil-based medium is used as the cooling medium in the motor 2, not only the lubricating performance of the bearing 30 is maintained or improved but also the bearing 30 is cooled.

In the motor 2, an amount of cooling medium according to the degree of cooling is thus discharged to any desired portions be cooled, such as the coil ends 10a, 10b. The cooling medium is also discharged to lubricate the bearing 30.

The channel 40 includes the vertical channel 42. The cooling medium can thus be caused to flow upward and downward in the vertical direction. Since the channel 40 includes the vertical channel 42, the cooling medium can be discharged as desired to any desired portions to be cooled that are located at upper, middle, and lower positions in the vertical direction. Since the channel 40 includes the vertical channel 42 and the branch channel 44, the cooling medium can also be discharged as desired to the portions to be cooled that are located around the vertical channel 42.

Both the channel 40 and the discharge portion 50 are formed within the range of the thickness in the axial direction inside the cover 22. This avoids the need to form cooling medium channels or discharge ducts in the inner surface of the cover 22, and thus reduces the axial distance (e.g., the distance in the vehicle width direction) between the cover 22 and the coil ends 10a, 10b inside the motor case 20.

In the first embodiment, the channel 40 and the discharge portion 50 are formed inside the cover 22. However, the present disclosure is not limited to this. A channel 40 that protrudes toward the motor 2 may be formed in the inner surface of the cover 22, and a discharge portion 50 including a plurality of holes and ducts through which the cooling medium is discharged into the channel 40 may be formed.

In the first embodiment, the channel 40 has the cooling medium inlet 40a at the lower end of the vertical channel 42 so that the cooling medium flows upward through the channel 40 from the lower end of the channel 40. However, the cooling medium inlet 40a can be set at any position in the channel 40. The flow direction of the cooling medium in the channel 40 is not particularly limited, and may be downward.

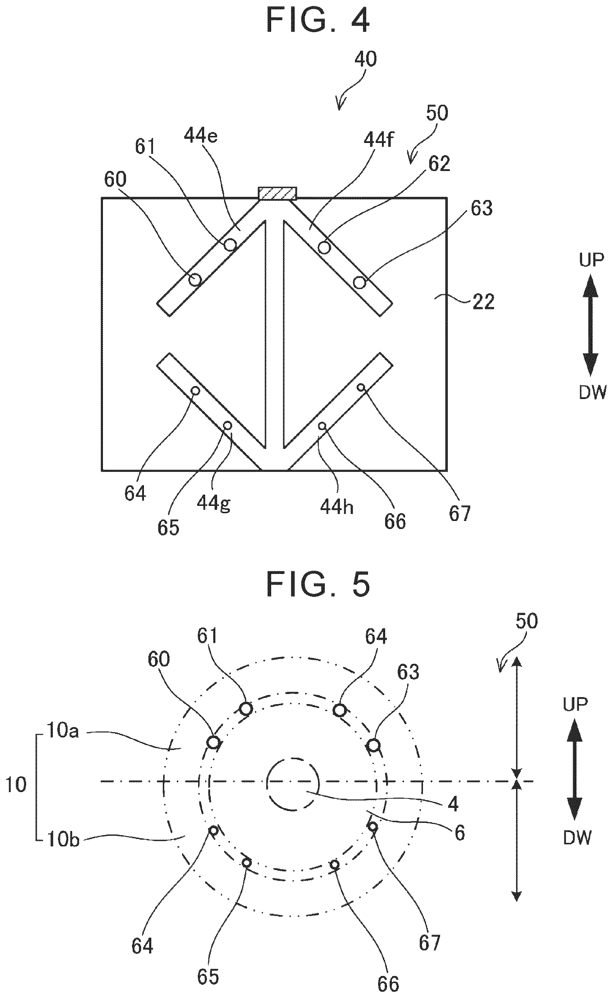

In the first embodiment, the channel 40 having the pattern shown in FIG. 2 is provided. However, the present disclosure is not limited to this. The pattern of the channel 40 is not particularly limited as long as the channel 40 includes at least one vertical channel 42. The pattern of the channel 40 is set as appropriate according to the portions of the motor 2 that are to be cooled. For example, a channel 40 having a pattern shown in FIG. 4 may be used. This channel 40 includes a vertical channel 42 and branch channels 44e, 44f, 44g, and 44h. The branch channels 44e, 44f extend obliquely in one direction (in FIG. 4, downward) from both sides of the vertical channel 42 at any upper height position of the vertical channel 42. The branch channels 44g, 44h extend obliquely in the other direction (in FIG. 4, upward) from both sides of the vertical channel 42 at any lower height position of the vertical channel 42.

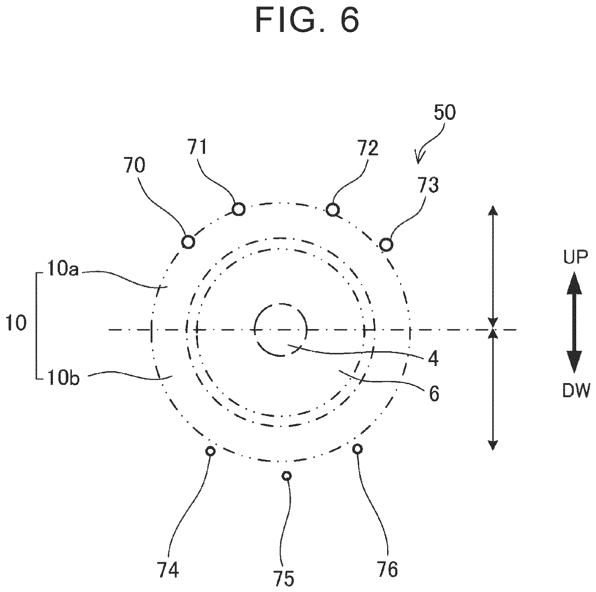

The pattern of the holes of the discharge portion 50 is also not particularly limited. The holes are formed in the vertical channel 42 and/or the branch channel 44 in various patterns according to the portions of the motor 2 that are to be cooled. The holes may be formed so that the cooling medium can be discharged from the holes not only toward the inner peripheries of the coil ends 10a, 10b but also toward the outer peripheries, distal end portions, etc. of the coil ends 10a, 10b. For example, as shown in FIGS. 4 and 5, the discharge portion 50 may include a plurality of holes 60 to 67 that can discharge the cooling medium toward the inner peripheries of the coil ends 10a, 10b. Alternatively, as shown in FIG. 6, the discharge portion 50 may include a plurality of holes 70 to 76 facing toward the outer peripheral surfaces of the coil ends 10a, 10b.

The opening area, such as the hole diameters, of the discharge portion 50 is also not particularly limited. The opening area of the discharge portion 50 is set as appropriate by taking into consideration the portions to be cooled, the discharge pressure of the cooling medium, the degree of cooling, etc.

### SECOND EMBODIMENT

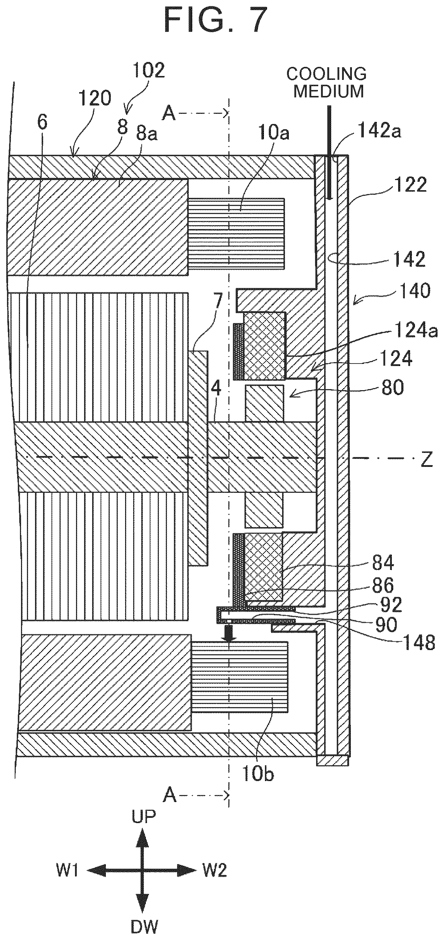

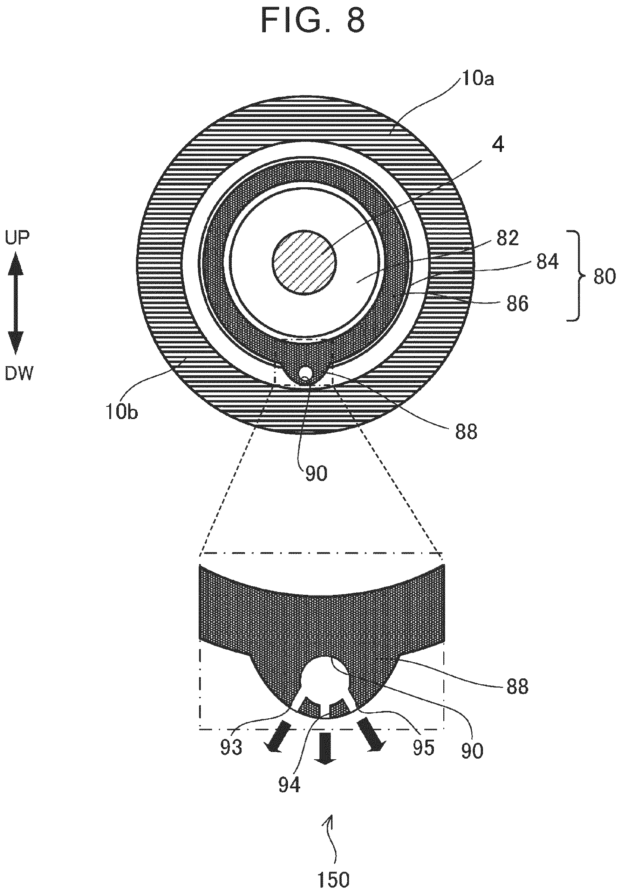

A second embodiment illustrates a form in which a cooling medium supplied into a cover 122 of a motor case 120 is discharged toward the coil end 10b via a resolver 80. FIG. 7 shows a section of a channel 140 provided in the cover 122 disposed on the non-output side of a motor 102 and a portion around the coil ends 10a, 10b. FIG. 8 shows a section taken along line A-A in FIG. 7. The same elements as those of the first embodiment will be denoted by the same signs as those of the first embodiment, and description thereof will be omitted. The following description will focus on the differences from the first embodiment.

The motor 102 includes the motor case 120, the channel 140, the resolver 80, and a connection channel 90. The motor 102 includes the shaft 4, the rotor 6, and the stator 8 that are configured in the same manner as that in the first embodiment. The cover 122 of the motor case 120 includes a fixing portion 124 for fixing the resolver 80 to the surface of the cover 122 that faces the motor 2. The fixing portion 124 includes a recessed portion 124a. The resolver 80 is fitted and fixed in the recessed portion 124a so that the resolver 80 is operable.

The channel 140 includes a vertical channel 142. The vertical channel 142 has a cooling medium inlet 142a at its upper end. The vertical channel 142 includes a connection portion 148 for connecting the connection channel 90 of the resolver 80. The connection portion 148 is formed below the resolver 80. The connection portion 148 has such a recessed shape that the connection channel 90 of the resolver 80 described below can be inserted and sealed in a liquid-tight manner in the connection portion 148. For the liquid-tight sealing, a seal member such as an O-ring (not shown) is disposed between the inner peripheral surface of the connection portion 148 and the outer peripheral surface of the connection channel 90.

The resolver 80 is fixed to the shaft 4 so as to face the rotor 6 in the axial direction. The outer periphery of the resolver 80 is surrounded by the coil ends 10a, 10b. The resolver 80 includes a rotor 82, a stator 84, and a protective cover 86. The rotor 82 is fixed to the shaft 4, and the stator 84 is an annular element about the central axis Z. The protective cover 86 is an annular member that covers a coil end of the stator 84 etc., and is made of a resin material etc. The resolver 80 is an example of the rotation angle sensor unit disclosed in the present specification.

As shown in FIGS. 7 and 8, the protective cover 86 includes the connection channel 90 at its lower edge. The connection channel 90 is a cylindrical duct in the axial direction. The connection channel 90 is formed in an end 88 of the protective cover 86. The end 88 is a portion that extends radially outward from part of the lower edge of the protective cover 86. The connection channel 90 is disposed so as to face the inner peripheral surface of the coil end 10b of the stator 84. The connection channel 90 is provided at the lower edge of the protective cover 86 by integral molding etc.

An end of the connection channel 90 that faces the rotor 6 in the axial direction is closed. An end of the connection channel 90 that faces the cover 122 is open and forms a communication portion 92 that communicates with the channel 140.

A discharge portion 150 includes a plurality of holes 93, 94, and 95 provided in the connection channel 90. The holes 93 to 95 are formed in a peripheral wall of the connection channel 90 that faces the inner peripheral surface of the coil end 10b. The holes 93 to 95 are open at such positions that the cooling medium can be discharged from the connection channel 90 toward the inner periphery of the coil end 10b through the holes 93 to 95. The holes 93 to 95 are located closer to the center than the coil end 10b, and are provided at such positions that the holes 93 to 95 are located in the axial range of the coil end 10b.

Next, functions of the motor 102 will be described. The cooling medium is supplied from the cooling medium inlet 142a into the vertical channel 142, and reaches the connection channel 90 via the connection portion 148 and the communication portion 92. The cooling medium is discharged from the holes 93 to 95 toward the inner circumferential surface of the coil end 10b. Since the cooling medium is discharged to the inner peripheral surface of the coil end 10b, the coil end 10b is efficiently cooled. Moreover, the space in which the resolver 80 is disposed is effectively used to discharge the cooling medium to the coil end 10b. Therefore, even when the resolver 80 is provided, the axial distance (e.g., the distance in the vehicle width direction) between the motor 102 and the cover 122 is reduced.

In the second embodiment, the connection channel 90 is provided only in the lowermost part of the protective cover 86 of the resolver 80. However, the present disclosure is not limited to this. One or more connection channels 90 and holes serving as the discharge portion 150 may be provided at any positions in the protective cover 86. In this case, it may be necessary to form branch channels in the vertical channel 142.

In the second embodiment, the holes 93 to 95 are formed in the peripheral wall of the connection channel 90 so as to face the inner periphery of the coil end 10b. However, the present disclosure is not limited to this. The discharge portion 150 is formed so as to face a portion to be cooled, such as another portion of the coil end 10b, as necessary.

The second embodiment illustrates a form in which the cooling medium is discharged via the resolver 80. However, the present disclosure may include various aspects of the channel 140 and the discharge portion 50 in the first embodiment. The second embodiment may also include various modifications of the first embodiment.

According to the disclosure of the present specification, the present specification can include the following configurations.

### APPENDIX 1

A motor including:
a rotor fixed to a shaft;
a stator having an annular shape about a central axis of the rotor; and a motor case that houses the rotor and the stator, wherein
the motor case includes a cooling medium channel and discharge portions in a surface of the motor case that faces the stator in an axial direction of the central axis,
the cooling medium channel includes at least a first channel through which a cooling medium flows in a vertical up-down direction, and
the cooling medium is discharged in the axial direction from the cooling medium channel through the discharge portions toward inside of the motor case.

### APPENDIX 2

The motor according to Appendix 1, wherein
the cooling medium channel includes at least one second channel that branches off from the first channel, and
at least one of the discharge portions is located in the at least one second channel.

### APPENDIX 3

The motor according to Appendix 1 or 2, wherein
the motor case includes a cover in the surface that faces the stator in the axial direction,
the cooling medium channel is inside the cover, and
the discharge portions are holes that communicate with the cooling medium channel inside the cover.

### APPENDIX 4

The motor according to any one of Appendixes 1 to 3, wherein the discharge portions include a hole that discharges the cooling medium toward a coil end of the stator.

### APPENDIX 5

The motor according to any one of Appendixes 1 to 4, wherein the discharge portions include a hole that discharges the cooling medium toward an inner periphery of a coil end of the stator.

### APPENDIX 6

The motor according to any one of Appendixes 1 to 5, wherein the discharge portions include a hole that discharges the cooling medium to a bearing for the shaft to lubricate the bearing.

### APPENDIX 7

The motor according to any one of Appendixes 1 to 6, wherein the discharge portions include holes having different diameters.

### APPENDIX 8

The motor according to Appendix 7, wherein
the holes having the different diameters include a first hole having a first diameter and a second hole having a second diameter different from the first diameter,
the first hole discharges the cooling medium toward a portion of a coil end that is located in a vertically upper part of the stator, and
the second hole discharges the cooling medium toward a portion of the coil end that is located in a vertically lower part of the stator.

### APPENDIX 9

The motor according to any one of Appendixes 1 to 8, further including: a rotation angle sensor unit that includes:
a rotation angle sensor that detects a rotation angle of the rotor; and
a protective cover attached to the rotation angle sensor, wherein

the protective cover includes a connection channel that communicates with the cooling medium channel,
the discharge portions include holes provided in the connection channel, and
the holes discharge the cooling medium from the connection channel toward a coil end of the stator.

### APPENDIX 10

The motor according to Appendix 9, wherein at least one of the holes discharges the cooling medium toward an inner periphery of the coil end.

Although specific examples of the present disclosure are described in detail above, these are merely illustrative, and are not intended to limit the scope of the claims. The technique described in the claims includes various modifications and alterations of the specific examples illustrated above. The technical elements illustrated in the present specification or the drawings have technical utility alone or in various combinations, and are not limited to the combinations described in the claims as originally filed. The technique illustrated in the present specification or the drawings can achieve a plurality of objects at the same time, and has technical utility by achieving one of the objects.

The claims of the parent application are reproduced below. These clauses define preferable combinations of features. The applicant reserves the right to pursue protection for these combinations of features, and/or any other subject-matter contained in the parent application as filed, either in the present divisional application or in a further application divided from the present divisional application. The claims of the parent application are not the claims of the current application which are contained in a separate section headed "claims".
1. A motor (2; 102), comprising:
   a shaft (4);
   a rotor (6) fixed to the shaft (4);
   a stator (8) having an annular shape about a central axis (Z) of the rotor (6); and a motor case (20; 120) that houses the rotor (6) and the stator (8), wherein
   the motor case (20; 120) includes a cooling medium channel (40; 140) and discharge portions (50, 150) in a surface of the motor case (20; 120) that faces the stator (8) in an axial direction of the central axis (Z),
   the cooling medium channel (40; 140) includes at least a first channel (42; 142) through which a cooling medium flows in a vertical up-down direction, and
   the cooling medium is discharged in the axial direction from the cooling medium channel (40; 140) through the discharge portions (50, 150) toward inside of the motor case (20; 120).
2. The motor (2) according to clause 1, wherein
   the cooling medium channel (40) includes at least one second channel (44) that branches off from the first channel (42), and
   at least one of the discharge portions (50) is located in the at least one second channel (44).
3. The motor (2) according to clause 1, wherein
   the motor case (20) includes a cover (22) in the surface that faces the stator (8) in the axial direction,
   the cooling medium channel (40) is inside the cover (22), and
   the discharge portions (50) are holes (51-57; 60-67; 70-76) that communicate with the cooling medium channel (40) inside the cover (22).
4. The motor (2) according to clause 1, wherein the discharge portions (50) include a hole (51-56; 60-67; 70-76) that discharges the cooling medium toward a coil end (10a, 10b) of the stator (8).
5. The motor (2) according to clause 1, wherein the discharge portions (50) include a hole (60-67) that discharges the cooling medium toward an inner periphery of a coil end (10a, 10b) of the stator (8).
6. The motor (2) according to clause 1, further comprising
   a bearing (30) for the shaft (4), wherein
   the discharge portions (50) include a hole (57) that discharges the cooling medium to the bearing (30) to lubricate the bearing (30).
7. The motor (2) according to clause 1, wherein the discharge portions (50) include holes (51-57; 60-67; 70-76) having different diameters.
8. The motor (2) according to clause 7, wherein
   the holes (51-57; 60-67; 70-76) having the different diameters include a first hole (51-53; 60-63; 70-73) having a first diameter and a second hole (54-56; 64-67; 74-76) having a second diameter different from the first diameter,
   the first hole (51-53; 60-63; 70-73) discharges the cooling medium toward an upper portion of a coil end (10a, 10b) that is located in a vertically upper part of the stator (8), and
   the second hole (54-56; 64-67; 74-76) discharges the cooling medium toward a lower portion of the coil end (10a, 10b) that is located in a vertically lower part of the stator (8).
9. The motor (102) according to clause 1, further comprising:
   a rotation angle sensor unit (80) that includes:
      a rotation angle sensor (82, 84) that detects a rotation angle of the rotor (6); and
      a protective cover (86) attached to the rotation angle sensor (82, 84), wherein
   the protective cover (86) includes a connection channel (90) that communicates with the cooling medium channel (140),
   the discharge portions (150) include holes (93-95) provided in the connection channel (90), and
   the holes (93-95) discharge the cooling medium from the connection channel (90) toward a coil end (10a, 10b) of the stator (8).
10. The motor (102) according to clause 9, wherein at least one of the holes (93-95) discharges the cooling medium toward an inner periphery of the coil end (10a, 10b).

## Claims

1. A motor (2; 102), comprising:
a shaft (4);
a rotor (6) fixed to the shaft (4);
a stator (8) having an annular shape about a central axis (Z) of the rotor (6); and
a motor case (20; 120) that houses the rotor (6) and the stator (8), wherein
the motor case (20; 120) includes a cooling medium channel (40; 140) and discharge portions (50, 150) in a surface of the motor case (20; 120) that faces the stator (8) in an axial direction of the central axis (Z),
the cooling medium channel (40; 140) includes at least a first channel (42; 142) through which a cooling medium flows in a vertical up-down direction, and
the cooling medium is discharged in the axial direction from the cooling medium channel (40; 140) through the discharge portions (50, 150) toward inside of the motor case (20; 120), further comprising:
a rotation angle sensor unit (80) that includes:
a rotation angle sensor (82, 84) that detects a rotation angle of the rotor (6); and
a protective cover (86) attached to the rotation angle sensor (82, 84), wherein
the protective cover (86) includes a connection channel (90) that communicates with the cooling medium channel (140),
the discharge portions (150) include holes (93-95) provided in the connection channel (90), and
the holes (93-95) discharge the cooling medium from the connection channel (90) toward a coil end (10a, 10b) of the stator (8).

2. The motor (2) according to claim 1, wherein
the cooling medium channel (40) includes at least one second channel (44) that branches off from the first channel (42), and
at least one of the discharge portions (50) is located in the at least one second channel (44).

3. The motor (2) according to claim 1, wherein
the motor case (20) includes a cover (22) in the surface that faces the stator (8) in the axial direction,
the cooling medium channel (40) is inside the cover (22), and
the discharge portions (50) are holes (51-57; 60-67; 70-76) that communicate with the cooling medium channel (40) inside the cover (22).

4. The motor (2) according to claim 1, wherein the discharge portions (50) include a hole (51-56; 60-67; 70-76) that discharges the cooling medium toward a coil end (10a, 10b) of the stator (8).

5. The motor (2) according to claim 1, wherein the discharge portions (50) include a hole (60-67) that discharges the cooling medium toward an inner periphery of a coil end (10a, 10b) of the stator (8).

6. The motor (2) according to claim 1, further comprising
a bearing (30) for the shaft (4), wherein
the discharge portions (50) include a hole (57) that discharges the cooling medium to the bearing (30) to lubricate the bearing (30).

7. The motor (2) according to claim 1, wherein the discharge portions (50) include holes (51-57; 60-67; 70-76) having different diameters.

8. The motor (102) according to claim 1, wherein at least one of the holes (93-95) discharges the cooling medium toward an inner periphery of the coil end (10a, 10b).
